# EUROPÄISCHE PATENTSCHRIFT

(11) **EP 1 043 900 B1**
(45) Veröffentlichungstag und Bekanntmachung des Hinweises auf die Patenterteilung: **12.05.2010**
(21) Anmeldenummer: 00107386.5
(22) Anmeldetag: 05.04.2000
(51) Int. Cl.: H04Q 3/545

(54) **Verfahren und Anordnung zum Bereitstellen von landessprachenspezifischen Datensätzen an einer Kommunikationseinrichtung**
Method and arrangement for providing national language specific data in a communication system
Procédé et dispositif pour fournir des données spécifiques à des langues nationales dans un système de communication

(30) Priorität: 07.04.1999 DE 19915652
(43) Veröffentlichungstag der Anmeldung: 11.10.2000
(73) Patentinhaber: SIEMENS AKTIENGESELLSCHAFT, 80333 München (DE)
(72) Erfinder: Karnatz, Hans-Jürgen, 58730 Fröndenberg (DE)
(74) Vertreter: Fritzsche, Thomas

(56) Entgegenhaltungen:
- EP-A- 0 557 681
- EP-A- 0 766 486
- DE-A- 3 338 396
- US-A- 4 928 306

## Beschreibung

Die vorliegende Erfindung betrifft ein Verfahren bzw. eine Anordnung zum Bereitstellen von landessprachen-spezifischen Datensätzen in einem Programmspeicher einer Kommunikationseinrichtung gemäß dem Oberbegriff des Patentanspruchs 1 bzw. 11, wie z.B. bereits aus der EP-A-0 557 681 bekannt.

Aus der Produktschrift der Fa. Siemens "ISDN im Büro - HICOM", Sonderausgabe telcom report und Siemens-Magazin COM, 1985, ISBN 3-8009-3849-9, insbesondere der Seiten 58 bis 66, ist eine private Kommunikationsanlage bekannt, die neben vermittlungsbezogenen Funktionen zusätzliche Funktionen zur Verfügung stellt. Solche zusätzlichen Funktionen werden im allgemeinen als Leistungsmerkmale bezeichnet, wobei hierbei insbesondere für den Kommunikationsdienst "Sprache" eine große Zahl unterschiedlicher Leistungsmerkmale bekannt sind.

Bei modernen - beispielsweise an die bekannte Kommunikationsanlage angeschlossenen - Kommunikationsendgeräten erfolgt eine Bedienerführung und eine Aktivierung von Leistungsmerkmalen in zunehmenden Maße über eine, von der Kommunikationsanlage gesteuerte Bedienoberfläche mit Displaytexten oder alternativ durch akustische Ansagen über einen Lautsprecher. Bei einem Nutzerkreis, der sich aus Kommunikationsteilnehmern mit unterschiedlichen Landessprachen zusammensetzt, besteht somit die Notwendigkeit die Displaytexte bzw. die akustischen Ansagen in unterschiedlichen Sprachen anzubieten, da ansonsten nur eine sehr eingeschränkten Nutzungsmöglichkeit der Kommunikationsendgeräte möglich wäre.

Bei der bekannten Kommunikationsanlage werden einem Kommunikationsteilnehmer beispielsweise Displaytexte für eine Endgeräte-Bedienoberfläche in einer voreingestellten Anzahl von Sprachen zur Verfügung gestellt. Die landessprachen-spezifischen Datensätze für die Anzeigetexte von Bedienoberflächen sind dabei im allgemeinen in einem nicht-flüchtigen Programmspeicher - in der Literatur häufig mit ROM (Read Only Memory) abgekürzt - der Kommunikationsanlage gespeichert. Dies bedeutet einerseits bei einer großen Anzahl von unterschiedlichen Landessprachen einen, durch die damit verbundene große Anzahl von zu speichernden landessprachen-spezifischen Datensätzen großen Speicherplatzbedarf in der Kommunikationsanlage, der mit höheren Herstellungskosten der Kommunikationsanlage verbunden ist, andererseits bedeutet eine Reduzierung der Anzahl der unterschiedlichen Landessprachen eine Leistungsmerkmalseinschränkung für einen, der Kommunikationsanlage zugeordneten Kommunikationsteilnehmer.

Der vorliegenden Erfindung liegt daher die Aufgabe zugrunde, ein Verfahren bzw. eine Anordnung anzugeben, durch die der Speicherplatzbedarf in einer Kommunikationseinrichtung bei gleichzeitiger Beibehaltung der Anzahl der unterschiedlichen Landessprachen reduziert werden kann.

Gelöst wird die Aufgabe ausgehend von den Merkmalen des Oberbegriffs der Patentansprüche 1 bzw. 11 durch deren kennzeichnende Merkmale.

Zum besseren Verständnis der Funktionsweise einer Kommunikationsanlage erscheint es erforderlich zunächst noch einmal auf bekannte Prinzipien näher einzugehen.

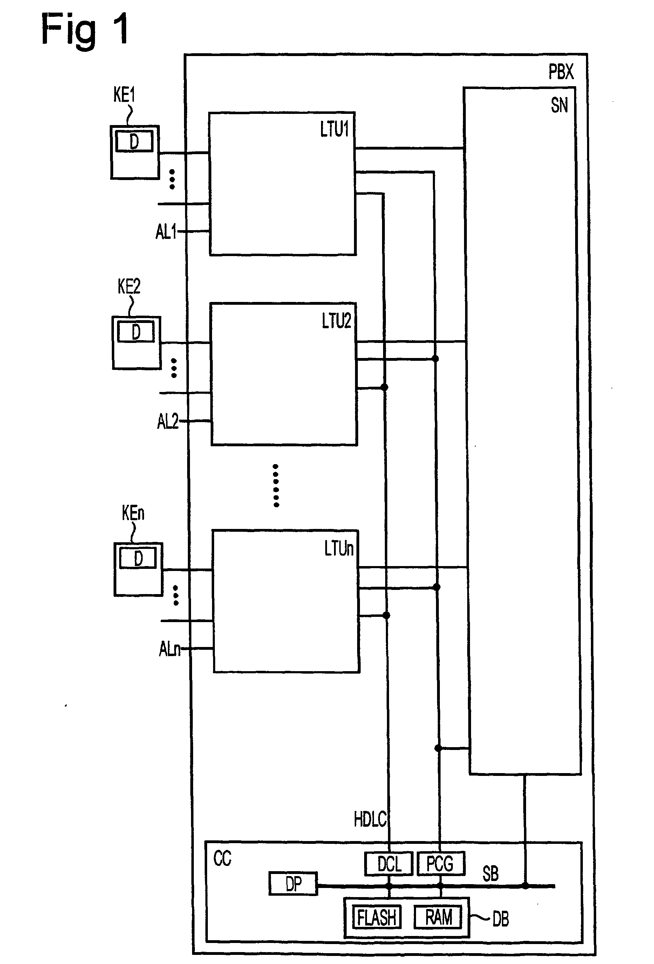

Einem schnelleren Verständnis dient hierbei Fig. 1, die eine schematische Darstellung der wesentlichen Funktionseinheiten einer Kommunikationsanlage PBX zeigt. Die dargestellte Kommunikationsanlage PBX besteht im wesentlichen aus einer zentralen Steuerung CC, die mit Anschlußeinheiten LTU1,LTU2,..., LTUn und einem Koppelnetz SN verbunden ist.

Über die Anschlußeinheiten LTU1,LTU2,...,LTUn werden üblicherweise mittels S₀-Schnittstellen ISDN-Kommunikationsendgeräte (Integrated Services Digital Network) oder mittels daraus abgeleiteten Schnittstellen, wie beispielsweise Uₚ₀-Schnittstellen digitale Kommunikationsendgeräte an die Kommunikationsanlage PBX angeschlossen. Allgemein umfassen eine U_{P0}- bzw. eine S₀-Schnittstelle zum einen 2 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 16 kBit/s ausgestaltet ist. Des weiteren können über sogenannte a/b-Schnittstellen analoge Kommunikationsendgeräte - beispielsweise Facsimile-Endgeräte - an die Kommunikationsanlage PBX angeschlossen werden. In der Figur sind beispielhaft drei Kommunikationsendgeräte KE1, KE2 und KEn dargestellt, die jeweils eine optische Bedienoberfläche D zum Anzeigen von Displaytexten aufweisen.

Über die Anschlußeinheiten LTU1,LTU2,...,LTUn erfolgt des weiteren über Anschlußleitungen AL1,AL2,...,ALn ein Anschluß der Kommunikationsanlage PBX an Kommunikationsnetze bzw. Sondereinrichtungen. Der Anschluß erfolgt dabei beispielsweise über sogenannte ISDN-Basisanschlüsse - in der Literatur auch als 'PCM-Highways' bezeichnet - welche im allgemeinen 30 Nutzdatenkanäle umfassen, die als ISDN-orientierte B-Kanäle mit einer Übertragungsbitrate von jeweils 64 kBit/s ausgestaltet sind und einen Signalisierungskanal umfassen, welcher als ISDN-orientierter D-Kanal mit einer Übertragungsbitrate von 64 kBit/s ausgestaltet ist.

Die Anschlußeinheiten LTU1, LTU2, ... LTUn sind mit dem Koppelnetz SN ebenfalls über sogenannte 'PCM-Highways' verbunden. Der Meldungsaustausch zwischen den Anschlußeinheiten LTU1, LTU2,... LTUn und der zentralen Steuerung CC erfolgt über eine Signalisierungsleitung HDLC (High Level Data Link Control) im bekannten HDLC-Punkt-zu-Mehrpunkt-Verfahren.

Das Koppelnetz SN ist vorzugsweise modular aufgebaut und besteht beispielsweise aus einer blockierungsfreien Zeitstufe für 16 Multiplexkanäle. Durch Zusammenschalten zweier derartiger Grundmodule entsteht eine Koppelstufe für 1024 Zeitlagen (32 Multiplexkanäle zu je 32 Kanälen).

Die zentrale Steuerung CC besteht aus einem Datenprozessor DP, einem Prozessor für Signalisierungssteuerung DCL, einem Taktgenerator PCG und einer Datenbasis DB. Die genannten Komponenten sind über einen Systembus SB, wie in der Figur dargestellt, miteinander verbunden. Die Datenbasis DB enthält einen nicht-flüchtigen Speicher FLASH und einen flüchtigen Speicher RAM. Im nicht-flüchtigen Speicher FLASH - in der Literatur häufig auch als Daten-Programm-Speicher bezeichnet - sind dabei die für die Steuerung der Kommunikationsanlage PBX notwendigen Programme und Daten gespeichert. Unter anderem sind im nicht-flüchtigen Daten-Programm-Speicher FLASH Anzeigetexte für die Bedienoberflächen D von, an der Kommunikationsanlage PBX angeschlossenen Kommunikationsendgeräte KE1, KE2,...,KEn in mehreren Landessprachen gespeichert. Durch ein Drücken einer - nicht dargestellten - sogenannten Sprachauswahltaste am Kommunikationsendgerät KE1, KE2, ...,KEn können die Bedienoberfläche D bzw. die akustischen Ansagen auf eine andere verfügbare Landessprache umgeschaltet werden. Welche Landessprache am Kommunikationsendgerät KE1,KE2,...,KEn eingestellt ist, kann beispielsweise entweder temporär bis zum Ende eines Gesprächs, oder statisch bis zur nächsten Sprachauswahl durch einen Kommunikationsteilnehmer als Selektorinformation im flüchtigen RAM gespeichert werden.

Für eine Steuerung einer Bedienoberfläche D einer, an der Kommunikationsanlage PBX angeschlossenen Kommunikationsendgerätes KE1,KE2,...,KEn werden die Anzeigetexte über die Signalisierungsleitung HDLC von der zentralen Steuerung CC an die, den Anschluß des Kommunikationsendgerätes KE1,KE2,...,KEn an die Kommunikationsanlage PBX realisierende Anschlußeinheit LTU1,LTU2,...,LTUn übermittelt. Die Anschlußeinheit LTU1, LTU2,...,LTUn leitet die Anzeigetexte daraufhin über den Signalisierungskanal D einer, das Kommunikationsendgerät KE1, KE2,...,KEn mit der Anschlußeinheit LTU1,LTU2,...,LTUn verbindende Teilnehmeranschlußleitung an das jeweilige Kommunikationsendgerät KE1,KE2,...,KEn weiter.

Ein wesentlicher Vorteil des erfindungsgemäßen Verfahrens bzw. der erfindungsgemäßen Anordnung besteht nun darin, daß ein Laden eines neu bereitzustellenden landessprachen-spezifischen Datensatzes in einen, nicht zum ablauffähigen Programmspeicherplatz eines Daten-Programm-Speichers der Kommunikationseinrichtung gehörenden Transfer-Speicherbereich während des Betriebs der Kommunikationseinrichtung ohne Beeinträchtigung des vermittlungstechnischen Ablaufs der Kommunikationseinrichtung erfolgen kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß einem, ein Kopieren des neu bereitzustellenden landessprachen-spezifischen Datensatzes vom Transfer-Speicherbereich in einen Aktiv-Speicherbereich des Programmspeichers realisierenden Steuerprozeß durch die Kommunikationseinrichtung eine möglichst hohe Priorität zugewiesen wird, so daß die für ein Kopieren des neu bereitzustellenden landessprachen-spezifischen Datensatzes und eine damit verbundene Unterbrechung des Betriebs der Kommunikationseinrichtung benötigte Zeitspanne minimiert werden kann.

Ein weiterer Vorteil von in den Unteransprüchen definierten Ausgestaltungen der Erfindung besteht darin, daß das Laden bzw. das Kopieren des bereitzustellenden landessprachen-spezifischen Datensatzes in Teilschritten erfolgt, wobei nach einem korrekten Ausführen eines Teilschrittes den, im Rahmen dieses Teilschrittes geladenen bzw. kopierten Daten eine Gültigkeitsidentifikation zugewiesen wird, so daß nach einer Unterbrechung des Lade- bzw. Kopiervorgangs nicht der gesamte unterbrochene Lade- bzw. Kopiervorgang neu gestartet werden muß, sondern daß der unterbrochene Lade- bzw. Kopiervorgang mit demjenigen Teilschritt fortgesetzt werden kann, dessen zugehörige Daten keine Gültigkeitsidentifizierung aufweisen.

Ein Ausführungsbeispiel der Erfindung wird im folgenden anhand der Zeichnung näher erläutert.

Dabei zeigen:
- Fig. 2:: ein Blockschaltbild zur schematischen Darstellung eines nicht-flüchtigen und eines flüchtigen Speichers der Kommunikationsanlage;
- Fig. 3:: ein Ablaufdiagramm zur Veranschaulichung der bei einem Laden eines Datensatzes von einem anlagenexternen Datensatzspeicher in den flüchtigen Speicher ablaufenden wesentlichen Verfahrensschritte;
- Fig. 4:: ein Ablaufdiagramm zur Veranschaulichung der bei einem Laden des Datensatzes vom flüchtigen in einen Transfer-Speicherbereich des nicht-flüchtigen Speichers ablaufenden wesentlichen Verfahrensschritte;
- Fig. 5:: ein Ablaufdiagramm zur Veranschaulichung der bei einem Kopieren des Datensatzes vom Transfer-Speicherbereich in einen Aktiv-Speicherbereich des nicht-flüchtigen Speichers ablaufenden wesentlichen Verfahrensschritte.

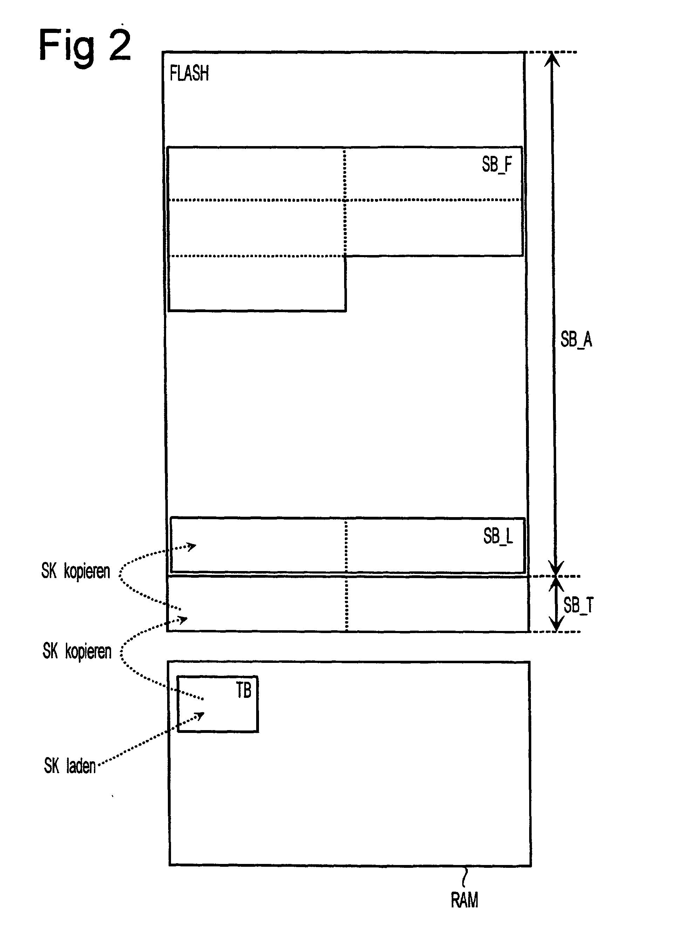

Fig. 2 zeigt eine schematische Darstellung eines flüchtigen Speichers RAM und eines nicht-flüchtigen Daten-Programm-Speichers FLASH der Datenbasis DB der Kommunikationsanlage PBX. Der Daten-Programm-Speicher FLASH ist in einen sogenannten Aktiv-Speicherbereich SB_A und in einen Transfer-Speicherbereich SB_T untergliedert, wobei aus dem Daten-Programm-Speicher FLASH sowohl Daten gelesen als auch in den Daten-Programm-Speicher FLASH Daten geschrieben werden können. Der Aktiv-Speicherbereich SB_A ist ein sogenannter ablauffähiger Programmspeicherplatz des Daten-Programm-Speichers FLASH und dient unter anderem der Speicherung von, für die Steuerung der Kommunikationsanlage PBX notwendigen Programmen und von zugehörigen Daten. Der Transfer-Speicherbereich SB_T ist ein nicht zum ablauffähigen Programmspeicherplatz gehörender Bereich des Daten-Programm-Speichers FLASH und dient im vorliegenden Ausführungsbeispiel einem Nachladen von Daten in den Daten-Programm-Speicher FLASH.

Unter anderem sind im Aktiv-Speicherbereich SB_A des Daten-Programm-Speichers FLASH Anzeigetexte für Bedienoberflächen D von an der Kommunikationsanlage PBX angeschlossenen Kommunikationsendgeräten KE1,...,KEn in unterschiedlichen Landessprachen gespeichert. Hierbei ist für jede anzuzeigende Landessprache ein - in der Regel circa 30 KByte großer - landessprachen-spezifischer Datensatz SK im Aktiv-Speicherbereich SB_A hinterlegt. Beim vorliegenden Ausführungsbeispiel können in einem ersten Teil-Speicherbereich SB_F des Aktiv-Speicherbereiches SB_A fünf landessprachen-spezifische Datensätze SK einrichtungsimmanent gespeichert werden. Zusätzlich zum ersten Teil-Speicherbereich SB_F können in einen - beispielsweise 64 KByte großen - zweiten Teil-Speicherbereich SB_L des Aktiv-Speicherbereiches SB_A zwei weitere landessprachenspezifische Datensätze SK geladen werden.

Die landessprachen-spezifischen Datensätze SK umfassen jeweils eine datensatzindividuelle Verzeichnisstruktur - in der Literatur häufig als 'directory' bezeichnet - durch welche ein einfacher Zugriff auf, in einem landessprachen-spezifischen Datensatz SK gespeicherte Einheiten - beispielsweise auf einzelne Anzeigetexte für die Bedienoberflächen D - möglich ist. Da die Länge von einzelnen Einheiten in Abhängigkeit der Landessprache stark variieren kann, erhält man durch die datensatzindividuelle Verzeichnisstruktur eine flexible Speicherstruktur, durch die mittels desselben Verzeichnisindexes - beispielsweise 'Anzeigetext 5' - in jedem landessprachen-spezifischen Datensatz SK unabhängig von der tatsächlichen Speicheradresse einer adressierten Einheit dieselbe Einheit selektierbar ist.

Der flüchtige Speicher RAM weist - wie der Daten-ProgrammSpeicher FLASH - einen Transfer-Speicherbereich TB - in der Literatur häufig als 'Transfer Buffer' bezeichnet - auf, der zum Zwischenspeichern von Daten dient. Soll ein neuer landessprachen-spezifischer Datensatz SK in den Daten-Programm-Speicher FLASH geladen werden, wird der neue landessprachenspezifische Datensatz SK in einem ersten Schritt von einem einrichtungsexternen - nicht dargestellten - Datensatzspeicher in den Transfer-Speicherbereich TB des flüchtigen Speichers RAM geladen. Das Laden des neuen landessprachen-spezifischen Datensatzes SK kann beispielsweise über eine, die Kommunikationsanlage PBX mit einer, den einrichtungsexternen Datensatzspeicher speichernde Einrichtung verbindende Fernsprechleitung AL1,...,ALn erfolgen. Alternativ kann eine, den einrichtungsexternen Datensatzspeicher speichernde Datenverarbeitungseinrichtung über eine Systemschnittstelle direkt an die Kommunikationsanlage PBX angeschlossen werden. Beispielsweise kann ein, den Datensatzspeicher speicherndes sogenanntes 'Notebook' über eine V.24-Schnittstelle an die Kommunikationsanlage PBX angeschlossen werden. Des weiteren besteht für einen Benutzer die Möglichkeit einen landessprachen-spezifischen Datensatz SK mittels eines an der Kommunikationsanlage PBX - beispielsweise über die V.24-Schnittstelle - angeschlossenen Datensatz-Assistenten individuell zu verändern und in den Transfer-Speicherbereich TB des flüchtigen Speichers RAM zu laden.

Der in den Transfer-Speicherbereich TB des flüchtigen Speichers RAM geladene landessprachen-spezifische Datensatz SK wird in einem nächsten Schritt in den Transfer-Speicherbereich SB_T des Daten-Programm-Speichers FLASH geladen. Ist der gesamte landessprachen-spezifische Datensatz SK im Transfer-Speicherbereich SB_T des Daten-Programm-Speichers FLASH gespeichert, so wird der landessprachen-spezifische Datensatz SK abschließend in den zweiten Teil-Speicherbereich SB_L des Aktiv-Speicherbereiches SB_A des Daten-Programm-Speichers FLASH kopiert.

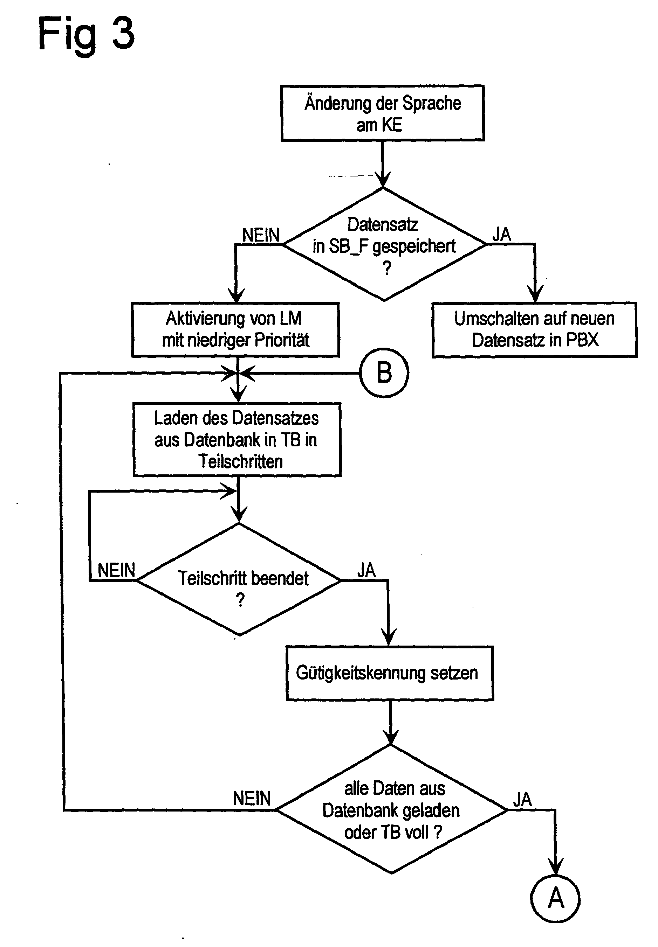

Fig. 3 zeigt ein Ablaufdiagramm mit den bei einem Laden eines landessprachen-spezifischen Datensatzes SK von dem einrichtungsexternen Datensatzspeicher in den Transfer-Speicherbereich TB des flüchtigen Speichers RAM ablaufenden wesentlichen Verfahrensschritten. Nach einer - beispielsweise durch Drücken einer Sprachauswahltaste an einem Kommunikationsendgerät KE1,...,KEn veranlaßten - Änderung der Landessprache einer Bedienoberfläche D eines, an der Kommunikationsanlage PBX angeschlossenen Kommunikationsendgerätes KE1,..,KEn wird eine, diese Änderung signalisierende Nachricht vom Kommunikationsendgerät KE1,.., KEn an die Kommunikationsanlage PBX übermittelt. Infolge eines Eintreffens einer derartigen Nachricht wird in der Kommunikationsanlage PBX überprüft, ob ein der ausgewählten Landessprache entsprechender landessprachenspezifischer Datensatz SK im ersten Teil-Speicherbereich SB-F des Daten-Programm-Speichers FLASH gespeichert ist. Ist dies der Fall, wird der entsprechende landessprachen-spezifische Datensatz SK im folgenden für eine Steuerung der Bedienoberfläche D des Kommunikationsendgerätes KE1,...,KEn verwendet, d.h. die Kommunikationsanlage PBX schaltet vom bisher verwendeten auf den, der neu ausgewählten Landessprache entsprechenden landessprachen-spezifischen Datensatz SK um.

Ist der entsprechende landessprachen-spezifische Datensatz SK nicht im ersten Teil-Speicherbereich SB-F des Aktiv-Speicherbereiches SB_A des Daten-Programm-Speichers FLASH gespeichert, wird ein sogenannter Lademanager LM der zentralen Steuerung CC der Kommunikationsanlage PBX für ein Laden des entsprechenden landessprachen-spezifischen Datensatzes SK in die Kommunikationsanlage PBX aktiviert. Dem Lademanager LM wird für diesen ersten Ladevorgang von einem Betriebssystem der zentralen Steuerung CC nur eine geringe Priorität zugeordnet, so daß der durch den Lademanager LM gesteuerte erste Ladevorgang unterbrochen werden kann und der vermittlungstechnische Ablauf der Kommunikationsanlage PBX durch den Ladevorgang nicht beeinträchtigt wird.

Ein Laden des entsprechenden landessprachen-spezifischen Datensatz SK erfolgt beim vorliegenden Ausführungsbeispiel in Teilschritten, wobei der entsprechende landessprachen-spezifische Datensatz SK - wie bereits oben beschreiben - zuerst in den Transfer-Speicherbereich TB des flüchtigen Speichers RAM geladen wird. Sind die im Rahmen eines Teilschrittes zu übermittelnden Daten korrekt in den Transfer-Speicherbereich TB des flüchtigen Speichers RAM übermittelt, wird diesen Daten eine sogenannte Gültigkeitsidentifizierung zugeordnet. Durch das Zuordnen einer Gültigkeitsidentifizierung zu den korrekt übermittelten Daten kann nach einer - beispielsweise infolge eines Stromausfalls oder eines 'Resets' der Kommunikationsanlage PBX erfolgten - Unterbrechung eines Ladevorgangs, der unterbrochene Ladevorgang mit demjenigen Teilschritt fortgesetzt werden, dessen zugehörige Daten keine Gültigkeitsidentifizierung aufweisen. Dies hat den Vorteil, daß nach einer Unterbrechung eines Ladevorgangs nicht der gesamte unterbrochene Ladevorgang neu gestartet werden muß, sondern lediglich die noch fehlenden Teilschritte des unterbrochenen Ladevorgangs ausgeführt werden müssen. Zusätzlich kann die Kommunikationsanlage PBX für eine Steuerung der Bedienoberflächen D von an der Kommunikationsanlage PBX angeschlossenen Kommunikationsendgeräten KE1,..., KEn auf Daten, die zwar noch nicht im ablauffähigen Programmspeicherplatz (im zweiten Teil-Speicherbereich SB_L des Aktiv-Speicherbereiches SB_A) des Daten-Programm-Speichers FLASH gespeichert sind, denen jedoch eine Gültigkeitsidentifizierung zugewiesen ist zugreifen, so daß bereits zu diesem Zeitpunkt eine Anzeige der Anzeigetexte an einer Bedienoberfläche D eines Kommunikationsendgerätes KE1,...,KEn in der neu ausgewählten Landessprache erfolgen kann.

Der in Teilschritte untergliederte erste Ladevorgang des entsprechenden landessprachen-spezifischen Datensatzes SK wird solange ausgeführt, bis entweder alle Daten des entsprechenden landessprachen-spezifischen Datensatzes SK im Transfer-Speicherbereich TB des flüchtigen Speichers RAM gespeichert sind, ober bis der Transfer-Speicherbereich TB des flüchtigen Speichers RAM voll ist, d.h. bis keine weiteren Daten in den Transfer-Speicherbereich TB des flüchtigen Speichers RAM mehr eingespeichert werden können. Nach Beendigung des ersten Ladevorgangs wird durch den Lademanager LM ein, sich direkt an den ersten Ladevorgang anschließender zweiter Ladevorgang gestartet.

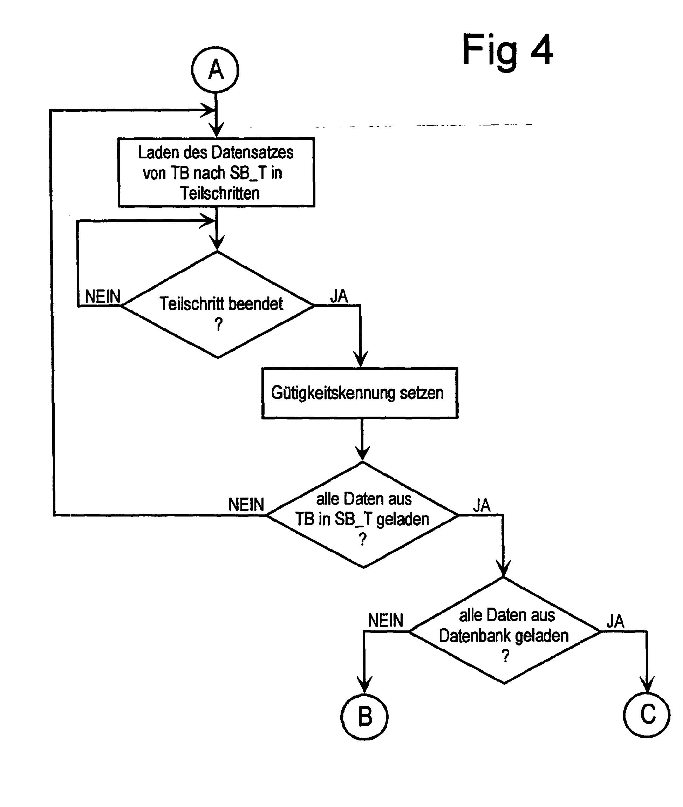

Fig. 4 zeigt ein Ablaufdiagramm mit den beim zweiten Ladevorgang, d.h. beim Laden des landessprachen-spezifischen Datensatzes SK vom Transfer-Speicherbereich TB des flüchtigen Speichers RAM in den Transfer-Speicherbereich SB_T des Daten-Programm-Speichers FLASH ablaufenden wesentlichen Verfahrensschritten. Der zweite Ladevorgang wird ebenfalls durch den Lademanager LM gesteuert, wobei dem Lademanager LM für diesen zweiten Ladevorgang vom Betriebssystem der zentralen Steuerung CC ebenfalls nur eine geringe Priorität zugeordnet wird, so daß der durch den Lademanager LM gesteuerte Ladevorgang unterbrochen werden kann und der vermittlungstechnische Ablauf der Kommunikationsanlage PBX durch den Ladevorgang nicht beeinträchtigt wird.

Analog zum ersten Ladevorgang erfolgt ein Laden des entsprechenden landessprachen-spezifischen Datensatzes SK in den nicht zum ablauffähigen Programmspeicherplatz des Daten-Programm-Speichers FLASH gehörenden Transfer-Speicherbereich SB_T in Teilschritten, wobei den im Rahmen eines Teilschrittes korrekt übermittelten Daten wiederum eine Gültigkeitsidentifizierung zugeordnet wird. Der zweite Ladevorgang wird dabei solange ausgeführt, bis alle im Transfer-Speicherbereich TB des flüchtigen Speichers RAM gespeicherten Daten in den Transfer-Speicherbereich SB_T des Daten-Programm-Speichers FLASH geladen sind.

Nach Beendigung des zweiten Ladevorgangs, d.h. nachdem alle im Transfer-Speicherbereich TB des flüchtigen Speichers RAM gespeicherten Daten in den Transfer-Speicherbereich SB_T des Daten-Programm-Speichers FLASH geladen wurden, wird überprüft, ob im Zuge des ersten Ladevorgangs alle Daten des entsprechenden landessprachen-spezifischen Datensatzes SK in den Transfer-Speicherbereich TB des flüchtigen Speichers RAM geladen wurden. Ist dies - beispielsweise aufgrund einer nur begrenzten Speicherkapazität (keiner 30 KByte) des Transfer-Speicherbereiches TB des flüchtigen Speichers RAM - nicht der Fall, wird der erste Ladevorgang mit demjenigen Teilschritt erneut gestartet, der ein Laden der noch fehlenden Daten des entsprechenden landessprachen-spezifischen Datensatzes SK in den Transfer-Speicherbereich TB des flüchtigen Speichers RAM realisiert (siehe Punkt B in Fig. 3).

Wurden dagegen alle Daten des entsprechenden landessprachenspezifischen Datensatzes SK im Zuge des ersten Ladevorgangs in den Transfer-Speicherbereich TB des flüchtigen Speichers RAM geladen, wird ein Kopiervorgang der Daten in den, zum ablauffähigen Programmspeicherplatz des Daten-Programm-Speichers gehörenden zweiten Teil-Speicherbereich SB_L des Aktiv-Speicherbereiches SB_A aktiviert.

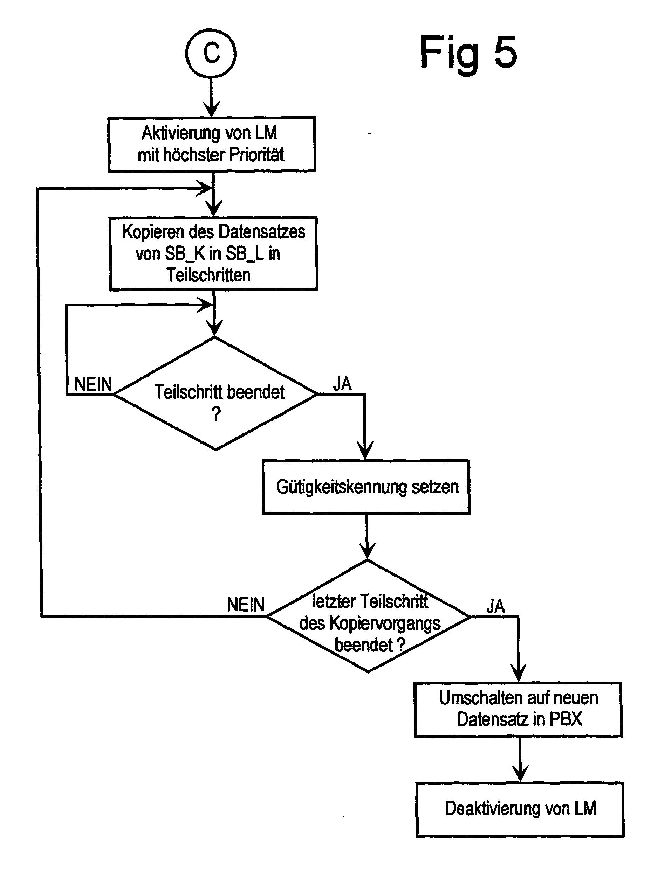

Fig. 5 zeigt ein Ablaufdiagramm mit den beim Kopiervorgang, d.h. beim Kopieren des landessprachen-spezifischen Datensatzes SK vom Transfer-Speicherbereich SB_T des Daten-Programm-Speichers FLASH in den zweiten Teil-Speicherbereich SB_L des Aktiv-Speicherbereiches SB_A des Daten-Programm-Speichers FLASH ablaufenden wesentlichen Verfahrensschritten. Der Kopiervorgang wird ebenfalls durch den Lademanager LM der zentralen Steuerung CC gesteuert, wobei dem Lademanager LM für diesen Kopiervorgang vom Betriebssystem der zentralen Steuerung CC eine möglichst hohe Priorität zugeordnet wird, so daß der vom Lademanager LM gesteuerte Kopiervorgang nicht unterbrochen wird. Für ein Kopieren des landessprachen-spezifischen Datensatzes SK in den Aktiv-Speicherbereich SB_A des Daten-Programm-Speichers FLASH ist es notwendig, den vermittlungstechnischen Ablauf der Kommunikationsanlage PBX anzuhalten, so daß durch das Zuweisen einer möglichst hohen Priorität für den, den Kopiervorgang steuernden Lademanager LM die Unterbrechung des normalen vermittlungstechnischen Betriebs der Kommunikationsanlage PBX so kurz wie möglich gehalten wird.

Analog zum ersten und zum zweiten Ladevorgang erfolgt ein Kopieren des entsprechenden landessprachen-spezifischen Datensatzes SK in den zweiten Teil-Speicherbereich SB_L des AktivSpeicherbereiches SB_A des Daten-Programm-Speichers FLASH in Teilschritten, wobei den im Rahmen eines Teilschrittes korrekt übermittelten Daten wiederum eine Gültigkeitsidentifizierung zugeordnet wird. Der Kopiervorgang wird dabei solange ausgeführt, bis alle Daten aus dem Transfer-Speicherbereich SB_T des Daten-Programm-Speichers FLASH in den zweiten TeilSpeicherbereich SB_L des Aktiv-Speicherbereiches SB_A des Daten-Programm-Speichers FLASH kopiert sind. Der Kopiervorgang dauert insgesamt nur ca. 1 Sekunde, so daß es für einen Kommunikationsteilnehmer nicht zu einer spürbaren Beeinträchtigung des normalen vermittlungstechnischen Betriebs der Kommunikationsanlage PBX kommt.

Wurde der letzte Teilschritt des Kopiervorgangs korrekt beendet, schaltet die Kommunikationsanlage PBX vom bisher verwendeten auf den, der neu ausgewählten Landessprache entsprechenden, im zweiten Teil-Speicherbereich SB_L des Aktiv-Speicherbereiches SB_A des Daten-Programm-Speichers FLASH gespeicherten landessprachen-spezifischen Datensatz SK um. Abschließend wird dürch die zentrale Steuerung CC der Kommunikationsanlage PBX der Lademanager LM deaktiviert.

Durch das Laden eines entsprechenden landessprachen-spezifischen Datensatzes SK in den nicht zum ablauffähigen Programmspeicherplatz gehörenden Transfer-Speicherbereich SB_T mit niedriger Priorität und durch das anschließende Kopieren des entsprechenden landessprachen-spezifischen Datensatzes SK in den zum ablauffähigen Programmspeicherplatz gehörenden AktivSpeicherbereich SB_A des nicht-flüchtigen Speichers FLASH mit höchster Priorität wird durch das erfindungsgemäße Verfahren ein Laden eines neuen landessprachen-spezifischen Datensatzes SK in die Kommunikationsanlage PBX während des normalen vermittlungstechnischen Betriebs ohne längere Blockade der Kommunikationsanlage PBX ermöglicht.

## Patentansprüche

1. Verfahren zum Bereitstellen von landessprachen-spezifischen Datensätzen (SK) an einer Kommunikationseinrichtung (PBX), wobei eine vorgebbare Anzahl von landessprachen-spezifischen Datensätzen (SK) in einem nicht-flüchtigen Daten-Programm-Speicher (FLASH) der Kommunikationseinrichtung (PBX) gespeichert sind,
**dadurch gekennzeichnet, daß** der nicht-flüchtige Daten-Programm-Speicher (FLASH) in einen Aktiv- und in einen Transfer-Speicherbereich (SB_A, SB_T) untergliedert ist, wobei im Aktiv-Speicherbereich (SB_A) die vorgebbare Anzahl von landessprachen-spezifischen Datensätzen (SK) einrichtungsimmanent gespeichert sind und ein Teil-Speicherbereich (SB_L) für ein Einspeichern weiterer landessprachen-spezifischer Datensätze (SK) eingerichtet ist, daß ein bereitzustellender landessprachen-spezifischer Datensatz (SK) von einem einrichtungsexternen Datensatzspeicher in den Transfer-Speicherbereich (SB_T) geladen wird, und daß nach Beendigung des Ladens der bereitzustellende landessprachen-spezifische Datensatz (SK) in den Teil-Speicherbereich (SB_L) kopiert wird.

2. Verfahren nach Anspruch 1,
**dadurch gekennzeichnet,**
**daß** der bereitzustellende landessprachen-spezifische Datensatz (SK) in einen ersten Schritt vom einrichtungsexternen Datensatzspeicher in einen flüchtigen Speicher (RAM) der Kommunikationseinrichtung (PBX) und in einem zweiten Schritt vom flüchtigen Speicher (RAM) in den Transfer-Speicherbereich (SB_T) geladen wird.

3. Verfahren nach Anspruch 1 oder 2,
**dadurch gekennzeichnet,**
**daß** das Laden und das Kopieren des bereitzustellenden landessprachen-spezifischen Datensatzes (SK) in Teilschritten erfolgt .

4. Verfahren nach Anspruch 3,
**dadurch gekennzeichnet, daß** nach einem korrekten Ausführen eines Teilschrittes den in diesem Teilschritt geladenen bzw. kopierten Daten eine Gültigkeitsidentifizierung zugewiesen wird.

5. Verfahren nach Anspruch 4,
**dadurch gekennzeichnet,**
**daß** infolge einer Unterbrechung des Ladens bzw. des Kopierens, das Laden bzw. das Kopieren mit demjenigen Teilschritt fortgesetzt wird, dessen zugehörige Daten keine Gültigkeitsidentifizierung zugewiesen ist.

6. Verfahren nach einem der vorhergehenden Ansprüche,
**dadurch gekennzeichnet,**
**daß** einem, das Laden des bereitzustellenden landessprachen-spezifischen Datensatzes (SK) steuernden Prozeß (LM) von der Kommunikationseinrichtung (PBX) eine niedrige Priorität zugewiesen wird.

7. Verfahren nach einem der vorhergehenden Ansprüche,
**dadurch gekennzeichnet,**
**daß** einem, das Kopieren des bereitzustellenden landessprachen-spezifischen Datensatzes (SK) steuernden Prozeß (LM) von der Kommunikationseinrichtung (PBX) eine hohe Priorität zugewiesen wird.

8. Verfahren nach einem der vorhergehenden Ansprüche,
**dadurch gekennzeichnet,**
**daß** ein Laden eines bereitzustellenden landessprachen-spezifischen Datensatzes (SK) vom einrichtungsexternen Datensatzspeicher über eine, die Kommunikationseinrichtung (PBX) mit dem einrichtungsexternen Datensatzspeicher verbindende Fernsprechleitung erfolgt.

9. Verfahren nach einem der Ansprüche 1 bis 7,
**dadurch gekennzeichnet, daß** ein Laden eines bereitzustellenden landessprachen-spezifischen Datensatzes (SK) vom einrichtungsexternen Datensatzspeicher über eine, die Kommunikationseinrichtung (PBX) mit einer, den einrichtungsexternen Datensatzspeicher beinhaltende Datenverarbeitungseinrichtung verbindende Einrichtungsschnittstelle (V.24) erfolgt.

10. Verfahren nach einem der vorhergehenden Ansprüche,
**dadurch gekennzeichnet,**
**daß** ein landessprachen-spezifischer Datensatz (SK) Anzeigetexte für eine Bedienoberfläche (D) eines Kommunikationsendgerätes (KE1, KE2,...,KEn) in einer Landessprache umfaßt.

11. Anordnung zum Bereitstellen von landessprachen-spezifischen Datensätzen (SK) an einer Kommunikationseinrichtung (PBX), wobei eine vorgebbare Anzahl von landessprachen-spezifischen Datensätzen (SK) in einem nicht-flüchtigen Daten-Programm-Speicher (FLASH) der Kommunikationseinrichtung (PBX) gespeichert sind,
**dadurch gekennzeichnet, daß** der nicht-flüchtige Daten-Programm-Speicher (FLASH) in einen Aktiv- und in einen Transfer-Speicherbereich (SB_A, SB_T) untergliedert ist, wobei im Aktiv-Speicherbereich (SB_A) die vorgebbare Anzahl von landessprachen-spezifischen Datensätzen (SK) einrichtungsimmanent gespeichert sind und ein Teil-Speicherbereich (SB_L) für ein Einspeichern weiterer landessprachen-spezifischer Datensätze (SK) eingerichtet ist, und daß die Kommunikationseinrichtung (PBX) eine Ladesteuereinrichtung (LM) zum Laden eines bereitzustellenden landessprachen-spezifischen Datensatzes (SK) von einem einrichtungsexternen Datensatzspeicher in den Transfer-Speicherbereich (SB_T) und zum Kopieren des bereitzustellenden landessprachen-spezifischen Datensatzes (SK) vom Transfer-Speicherbereich (SB_T) in den Teil-Speicherbereich (SB_L) aufweist.

12. Anordnung nach Anspruch 11,
**dadurch gekennzeichnet,**
**daß** an die Kommunikationseinrichtung (PBX) eine Datenverarbeitungseinrichtung zur benutzerindividuellen Konfigurierung eines landessprachen-spezifischen Datensatzes (SK) angeschlossen ist.

## Claims

1. Method for provision of language-specific data sets (SK) in a communication unit (PBX), whereby a predeterminable number of language-specific data sets (SK) are stored in a non-volatile data/program memory (FLASH) of the communication unit (PBX),
**characterised in**
**that** the non-volatile data/program memory (FLASH) is divided into an active and a transfer memory area (SB_A, SB_T), whereby in the active memory area (SB_A) the predeterminable number of language-specific data sets (SK) are stored as an integral part of the equipment and a part-memory area (SB_L) is set up for storage of additional language-specific data sets (SK),
**that** a language-specific data set (SK) to be provided is loaded from external data storage into the transfer memory area (SB_T), and
**that** once loading has been completed the language-specific data set (SK) to be provided is copied into the part-memory area (SB_L).

2. Method according to claim 1,
**characterised in**
**that** in a first step, the language-specific data set (SK) to be provided is loaded from external data storage into a volatile memory (RAM) of the communication unit (PBX) and, in a second step, from the volatile memory (RAM) into the transfer memory area (SB_T).

3. Method according to claim 1 or 2,
**characterised in**
**that** the loading and copying of the language-specific data set (SK) to be provided takes place in partial steps.

4. Method according to claim 3,
**characterised in**
**that** after a correct execution of a partial step the data loaded and/or copied in this partial step is given validity identification.

5. Method according to claim 4,
**characterised in**
**that** as the result of any interruption of the loading and/or copying, the loading and/or copying is continued with that partial step for which the associated data has not been given validity identification.

6. Method according to one of the preceding claims,
**characterised in**
**that** a process (LM) controlling the loading of the language-specific data set (SK) to be provided is given a low priority by the communication unit (PBX).

7. Method according to one of the preceding claims,
**characterised in**
**that** a process (LM) controlling the copying of the language-specific data set (SK) to be provided is given a high priority by the communication unit (PBX).

8. Method according to one of the preceding claims,
**characterised in**
**that** a language-specific data set (SK) to be provided is loaded from the external data storage via a telephone line connecting the communication unit (PBX) with the external data storage.

9. Method according to one of claims 1 to 7,
**characterised in**
**that** a language-specific data set (SK) to be provided is loaded from the external data storage via a unit interface (V.24) connecting the communication unit (PBX) with a data processing system containing the external data storage.

10. Method according to one of the preceding claims,
**characterised in**
**that** a language-specific data set (SK) includes display texts for a user interface (D) of a communication terminal (KE1, KE2,...,KEn) in one language.

11. Arrangement for provision of language-specific datasets (SK) in a communication unit (PBX), wherein a predeterminable number of language- specific data sets (SK) are stored in a non-volatile data/program memory (FLASH) of the communication unit (PBX),
**characterised in**
**that** the non-volatile data/program memory (FLASH) is divided into an active and a transfer memory area (SB_A, SB_T), and that in the active memory area (SB_A) the predeterminable number of language-specific data sets (SK) are stored as an integral part of the equipment and a part-memory area (SB_L) is set up for storage of additional language-specific data sets (SK), and that the communication unit (PBX) has a load control device (LM) for loading a language-specific data set (SK) to be provided from an external data storage into the transfer memory area (SB_T) and for copying the language-specific data set (SK) to be provided from the transfer memory area (SB_T) into the part-memory area (SB_L).

12. Arrangement according to claim 11,
**characterised in**
**that** a data processing unit for the user-specific configuration of a language-specific data set (SK) is attached to the communication unit (PBX).

## Revendications

1. Procédé pour fournir des ensembles de données spécifiques à des langues nationales (SK) à un système de communication (PBX), un nombre prédéfinissable d'ensembles de données spécifiques à des langues nationales (SK) étant mémorisés dans une mémoire non volatile de programmes et de données (FLASH) du système de communication (PBX), **caractérisé**
**en ce que** la mémoire non volatile de programmes et de données (FLASH) est sous-divisée en une plage de mémoire active et une plage de mémoire de transfert (SB_A, SB_T), le nombre prédéfinissable d'ensembles de données spécifiques à des langues nationales (SK) étant mémorisés de manière immanente au système dans la plage de mémoire active (SB_A) et une plage de mémoire partielle (SB_L) étant configurée pour une mémorisation d'autres ensembles de données spécifiques à des langues nationales (SK),
**en ce qu'**un ensemble de données spécifique à des langues nationales (SK) à fournir est chargé dans la plage de mémoire de transfert (SB_T) depuis une mémoire d'ensembles de données externe au système, et
**en ce que**, à l'issue du chargement, l'ensemble de données spécifique à des langues nationales (SK) à fournir est copié dans la plage de mémoire partielle (SB_L).

2. Procédé selon la revendication 1,
**caractérisé en ce que** l'ensemble de données spécifique à des langues nationales (SK) à fournir est chargé, dans une première étape, de la mémoire d'ensembles de données externe au système dans une mémoire volatile (RAM) du système de communication (PBX) et, dans une deuxième étape, de la mémoire volatile (RAM) dans la plage de mémoire de transfert (SB_T).

3. Procédé selon la revendication 1 ou 2,
**caractérisé en ce que** le chargement et la copie de l'ensemble de données spécifique à des langues nationales (SK) à fournir ont lieu au cours d'étapes partielles.

4. Procédé selon la revendication 3,
**caractérisé en ce que**, après une exécution correcte d'une étape partielle, une identification de validité est attribuée aux données chargées respectivement copiées au cours de cette étape partielle.

5. Procédé selon la revendication 4,
**caractérisé en ce que**, à la suite d'une interruption du chargement respectivement de la copie, le chargement respectivement la copie est poursuivi avec l'étape partielle dont les données associées ne se sont pas vues attribuer une identification de validité.

6. Procédé selon l'une quelconque des revendications précédentes, **caractérisé en ce qu'**une priorité basse est attribuée par le système de communication (PBK) à un processus (LM) commandant le chargement de l'ensemble de données spécifique à des langues nationales (SK) à fournir.

7. Procédé selon l'une quelconque des revendications précédentes, **caractérisé en ce qu'**une priorité élevée est attribuée par le système de communication (PBX) au processus (LM) commandant la copie de l'ensemble de données spécifique à des langues nationales (SK) à fournir.

8. Procédé selon l'une quelconque des revendications précédentes, **caractérisé en ce qu'**un chargement d'un ensemble de données spécifique à des langues nationales (SK) à fournir est effectué depuis la mémoire d'ensembles de données externe au système par le biais d'une ligne téléphonique reliant le système de communication (PBX) à la mémoire d'ensembles de données externe au système.

9. Procédé selon l'une des revendications 1 à 7,
**caractérisé en ce qu'**un chargement d'un ensemble de données spécifiques à des langues nationales (SK) à fournir est effectué depuis la mémoire d'ensembles de données externe au système par le biais d'une interface (V.24) du système reliant le système de communication (PBX) à un système de traitement de données contenant la mémoire d'ensembles de données externe au système.

10. Procédé selon l'une quelconque des revendications précédentes, **caractérisé en ce qu'**un ensemble de données spécifique à des langues nationales (SK) comporte des textes d'affichage destinés à une interface utilisateur (D) d'un terminal de communication (KE1, KE2, ..., KEn) dans une langue nationale.

11. Dispositif pour fournir des ensembles de données spécifiques à des langues nationales (SK) à un système de communication (PBX), un nombre prédéfinissable d'ensembles de données spécifiques à des langues nationales (SK) étant mémorisés dans une mémoire non volatile de programmes et de données (FLASH) du système de communication (PBX),
**caractérisé en ce que** la mémoire non volatile de programmes et de données (FLASH) est sous-divisée en une plage de mémoire active et une plage de mémoire de transfert (SB_A, SB_T), le nombre prédéfinissable d'ensembles de données spécifiques à des langues nationales (SK) étant mémorisés de manière immanente au système dans la plage de mémoire active (SB_A) et une plage de mémoire partielle (SB_L) est configurée pour une mémorisation d'autres ensembles de données spécifiques à des langues nationales (SK), et
**en ce que** le système de communication (PBX) comporte un système de commande de chargement (LM) destiné à charger un ensemble de données spécifique à des langues nationales (SK) à fournir dans la plage de mémoire de transfert (SB_T) depuis une mémoire d'ensembles de données externe au système et destiné à copier l'ensemble de données spécifique à des langues nationales (SK) à fournir de la plage de mémoire de transfert (SB_T) dans la plage de mémoire partielle (SB_L).

12. Dispositif selon la revendication 11,
**caractérisé en ce qu'**un système de traitement de données est raccordé au système de communication (PBX) pour la configuration, individuelle à chaque utilisateur, d'un ensemble de données spécifique à des langues nationales (SK).
